(19) Europäisches Patentamt
European Patent Office
Office européen des brevets

(11) Publication number: 0 125 911
B1

(12) **EUROPEAN PATENT SPECIFICATION**

(45) Date of publication of patent specification: **20.09.89**

(51) Int. Cl.$^4$: **C 08 F 10/00**, C 08 F 4/64

(21) Application number: **84303228.5**

(22) Date of filing: **11.05.84**

(54) **Process for production of olefin polymer or copolymer.**

(30) Priority: **11.05.83 JP 82139/83**

(43) Date of publication of application:
**21.11.84 Bulletin 84/47**

(45) Publication of the grant of the patent:
**20.09.89 Bulletin 89/38**

(84) Designated Contracting States:
**AT DE FR GB IT NL**

(56) References cited:
**EP-A-0 022 675**
**EP-A-0 045 977**

(73) Proprietor: **MITSUI PETROCHEMICAL INDUSTRIES, LTD.**
**2-5, Kasumigaseki 3-chome Chiyoda-ku**
**Tokyo 100 (JP)**

(72) Inventor: **Kioka, Mamoru**
**3-6, Misono 1-chome**
**Ohtake-shi Hiroshima-ken (JP)**
Inventor: **Kashiwa, Norio**
**2-9, Muronoki-cho 1-chome**
**Iwakuni-shi Yamaguchi-ken (JP)**

(74) Representative: **Myerscough, Philip Boyd et al**
**J.A. Kemp & Co. 14, South Square Gray's Inn**
**London, WC1R 5EU (GB)**

**EP 0 125 911 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to an improved process for producing olefin polymers (sometimes used to denote both homopolymers and copolymers of olefins) by polymerizing (sometimes used to denote homopolymerization and copolymerization) at least one olefin with or without a diolefin in the presence of a catalyst composed of [A] a solid titanium catalyst component containing magnesium, titanium, halogen and an electron donor, [B] an organometallic compound of a metal selected from the group consisting of metals of Groups I to III of the periodic table, and [C] an organosilicon compound having an Si—O—C or Si—N—C bond in its molecule.

Numerous suggestions have been made on the polymerization of olefins using a solid titanium catalyst component containing magnesium, titanium, halogen and an electron donor. Polymerization of alpha-olefins having at least 3 carbon atoms using this catalyst component can give highly stereospecific polymers with high catalytic activity.

It has been desired however to improve stereospecificity and catalytic activity further. For example, to obtain an olefin polymer having high quality without performing a work-up operation after polymerization, the proportion of a stereoregular polymer formed should be very high and the yield of the polymer per unit amount of the transition metal should also be high. Some of the prior techniques suggested may be said to be on a fairly high level in regard to the above factors when they are directed to the production of certain kinds of polymer. But few can be said to show sufficient performance from the standpoint of the residual halogen content of the polymer which is associated with the rusting of molding machines. In addition, many of them have the defect of undergoing not a small reduction in yield or stereospecificity in the production of polymers having a high melt index.

EP—A—45977 discloses catalysts for use in the polymerization of olefins which comprise the product of reacting a solid titanium catalyst component, an organoaluminum compound and an organosilicon compound having an Si—O—C or Si—N—C bond. The solid titanium catalyst component comprises an anhydrous magnesium dihalide support bearing a titanium dihalide or haloalcoholate and an ester which may be an ester of a polycarboxylic acid or an ester of an aromatic polyhydroxy compound.

EP—A—22675 proposed a process for producing a polymer or copolymer of an olefin which comprises polymerizing or copolymerizing at least one olefin, optionally with up to 5 mole% of a diolefin, in the presence of a catalyst composed of [A] a solid titanium catalyst component containing magnesium, titanium, halogen and an electron donor and derived from a magnesium-containing solid carrier obtained by contacting a magnesium compound in the liquid state with a precipitant, and [B] an organometallic compound of a metal of Groups I to III of the periodic table, the improvement wherein the catalyst component [A] is a reaction product of a titanium compound in the liquid state and a magnesium-containing solid carrier

(I) the magnesium-containing solid carrier being formed by contacting

(i) a magnesium compound in the liquid state having no reducing ability and not containing a tetraalkoxy-, tetracycloalkoxy- or tetraaryloxytitanium compound, said magnesium compound being selected from a liquid magnesium compound, a hydrocarbon solvent solution of a magnesium compound and a magnesium compound in the liquid state obtained by contacting a magnesium compound with an electron donor selected from alcohols, organic carboxylic acids, aldehydes, amines and the mixtures thereof, with

(ii) a precipitant other than a titanium compound,

in the presence or absence of (iii) an electron donor, and

(II) said reaction product being formed by reacting a titanium compound (iv) in the liquid state with the magnesium-containing solid carrier from (I), the electron donor (iii) being used at least once in (I) and (II).

EP—A—22675 states that the polymerization is carried out in the presence of the electron donor as a third component in addition to the catalyst components (A) and (B). As regards the electron donor, EP—A—22675 states that there can be used an electron donor such as ethers, ethylene glycol derivatives, amines, amides, sulfur-containing compounds, nitriles, esters, carboxylic acids, acid amides, oxy acid, keto acids, acid anhydrides, acid halides and amino acids. Organic esters, above all aromatic carboxylic acid esters, are preferred as the electron donor. Such an aromatic carboxylic acid ester is selected from those used in the preparation of the solid catalyst component (A). Benzoic acid esters and nuclearly substituted benzoic acid esters are especially preferred. Specific examples of the nuclearly substituted benzoic acid esters are toluates, t-butylbenzoates, anisates, phthalates, diterephthalates, hydroxybenzoates and aminobenzoates. Alkyl esters, for example $C_1$—$C_8$ alkyl esters, are preferred. Methyl p-toluate and ethyl p-toluate are most preferred.

EP—A—22675 neither describes nor suggests the use of an ester selected from polycarboxylic acid esters and polyhydroxy compound esters and naturally fails to describe or suggest the use of such an ester in conjunction with an organosilicon compound.

The present invention provides a process for producing a polymer or copolymer of an olefin which comprises polymerizing or copolymerizing at least one olefin with or without up to 5 mole% of a diolefin in the presence of a catalyst composed of

[a] a solid titanium catalyst component containing magnesium, titanium, halogen and an electron donor, which is a reaction product of (iv) a titanium compound in the liquid state and a magnesium-containing solid carrier, said magnesium-containing solid carrier being formed by contacting (i) a magnesium compound in the liquid state not containing a titanium compound and selected from a liquid magnesium compound, a hydrocarbon solvent solution of a magnesium compound and a magnesium compound in the liquid state obtained by contacting a magnesium compound with an electron donor capable of dissolving the magnesium compound, with (ii) a precipitant other than a titanium compound in the presence of or absence of (iii) an electron donor, said reaction product being formed by contacting the titanium compound (iv) in the liquid state and the magnesium-containing solid carrier, pre-treated or not pre-treated with the electron donor (iii), in the presence or absence of the electron donor (iii), the electron donor (iii) being used at least once throughout the period of formation of the magnesium-containing solid carrier and the formation of the reaction product, and

[b] an organometallic compound of a metal selected from metals of Groups I to III of the periodic table; characterised in that said catalyst is composed of

[A] a solid titanium catalyst component [a] in which the electron donor (iii) is an ester selected from polycarboxylic acid esters and polyhydroxy compound esters,

[B] the organometallic compound [b], and

[C] an organosilicon compound having an Si—O—C or Si—N—C bond in its molecule.

The process of the invention yields polymers having an excellent particle size, particle size distribution, particle shape and bulk density, which polymers can be produced with high catalytic performance and very little reduction in catalytic activity with the lapse of the polymerization time. The process of this invention removes the prior art's defect that an attempt at obtaining a polymer having high melt index by performing the polymerization in the presence of a molecular weight controlling agent such as hydrogen results in not a small reduction in stereospecificity. The process of this invention has been found to bring about the totally unexpected advantage that the use of a small amount of hydrogen can control the melt index of the polymer and the activity of the catalyst rather increases by using a molecular weight controlling agent such as hydrogen. It has further been found that when ethylene is polymerized in accordance with the process of this invention, a polymer having a narrow distribution of molecular weight can be obtained.

The process of this invention can be used favorably for polymerizing alpha-olefins having 2 to 8 carbon atoms, and can afford highly stereospecific polymers when applied, for example, to the polymerization of alpha-olefins having at least 3 carbon atoms. Even when the melt index of such a polymer is adjusted to the desired value by using a molecular weight controlling agent such as hydrogen, the stereospecificity of the polymer shows little or no decrease. Furthermore, when the process of this invention is carried out by the slurry polymerization method or gaseous-phase polymerization method, a granular or spherical polymer having a better particle size distribution and a better bulk density can be produced with excellent catalytic activity and a good reproducibility of quality.

The magnesium compound (i) used in the preparation of the solid titanium catalyst component [A] in this invention is preferably a magnesium compound having no reducing ability, that is a compound having no magnesium-carbon bond or magnesium-hydrogen bond. It may be one derived from a magnesium compound having reducing ability.

According to a preferred embodiment of this invention, therefore, a magnesium compound having no reducing ability which is in the liquid state and does not contain a titanium compound is used.

Examples of the magnesium compound having no reducing ability are magnesium halides such as magnesium chloride, magnesium bromide, magnesium iodide and magnesium fluoride; alkoxy magnesium halides preferably with the alkoxy having 1 to 20 carbon atoms such as methoxy magnesium chloride, ethoxy magnesium chloride, isopropoxy magnesium chloride, butoxy magnesium chloride, and octoxy magnesium chloride; aryloxy magnesium halides preferably with the aryloxy group having 6 to 30 carbon atoms such as phenoxy magnesium chloride and methylphenoxy magnesium chloride; alkoxy magnesiums preferably with the alkoxy group having 1 to 20 carbon atoms such as ethoxy magnesium, isopropoxy magnesium, butoxy magnesium and octoxy magnesium; aryloxy magnesiums preferably with the aryloxy group having 6 to 30 carbon atoms such as phenoxy magnesium and dimethylphenoxy magnesium; and magnesium salts of carboxylic acids such as magnesium laurate and magnesium stearate. The magnesium compounds may be in the form of complexes with other metals or mixtures with other metal compounds. Or two or more of these magnesium compounds may be used as mixtures. Preferred magnesium compounds are the halogen-containing magnesium compounds, above all magnesium chloride, alkoxy magnesium chlorides, preferably those having $C_1$—$C_{10}$ alkoxy, and aryloxy magnesium chlorides, preferably those having $C_6$—$C_{20}$ aryloxy.

The magnesium compound in the liquid state is preferably a solution of the magnesium compound in a hydrocarbon solvent or an electron donor or a mixture thereof capable of dissolving the magnesium compound.

Examples of the hydrocarbon solvent used for this purpose include aliphatic hydrocarbons such as pentane, hexane, heptane, octane, decane, dodecane, tetradecane and kerosene; alicyclic hydrocarbons such as cyclopentane, methylcyclopentane, cyclohexane, methylcyclohexane, cyclooctane and cyclohexane; aromatic hydrocarbons such as benzene, toluene, xylene, ethylbenzene, cumene and cymene; and halogenated hydrocarbons such as dichloroethane, dichloropropane, trichloroethylene, carbon tetrachloride and chlorobenzene.

A solution of the magnesium compound in such a hydrocarbon solvent can be prepared, for example,

by simply mixing both; mixing both and heating the mixture; or by mixing them in the presence of an electron donor capable of dissolving the magnesium compound, which is selected from the group consisting of alcohols, aldehydes, amines, organic carboxylic acids, ethers and mixtures thereof or a mixture of it with another electron donor (to be described), and optionally heating the mixture.

The method of preparation, however, differs depending upon the types of the magnesium compound and the solvent. In the case of dissolving a halogen-containing magnesium compound in a hydrocarbon solvent using an alcohol as a donor electron, the alcohol may be used, for example, in an amount of at least 1 mole, preferably 1 to 20 moles, especially preferably 1.5 to 12 moles, per mole of the halogen-containing magnesium compound, although the amount differs depending upon the type or amount of the hydrocarbon solvent, the type of the magnesium compound, etc. When an aliphatic hydrocarbon or an alicyclic hydrocarbon is used as the hydrocarbon solvent, alcohols are used in the aforesaid amount, but if among these alcohols, alcohols having at least 6 carbon atoms are used in an amount of at least 1 mole, preferably at least 1.5 moles, especially preferably at least 2 moles, per mole of the halogen-containing magnesium compound, the halogen-containing magnesium compound can be solubilized, and a catalyst component having high catalytic activity can be obtained, by using the alcohols in a small total amount. Thus, this embodiment is preferred.

There is no particular upper limit to the amount of the alcohols used, but economically, it should desirably be not too large. For example, the amount of the alcohol is not more than 40 moles, preferably not more than 20 moles, especially preferably not more than 10 moles, per mole of the magnesium compound.

If in the above embodiment of using alcohols, only alcohols having 5 or less carbon atoms are used, the total amount of the alcohols should be at least 15 moles per mole of the halogen-containing magnesium compound, and the resulting catalyst component has lower catalytic activity than in the case of using the alcohols in the aforesaid manner. On the other hand, if an aromatic hydrocarbon is used as the hydrocarbon solvent, the halogen-containing magnesium compound can be solubilized by using the alcohols in an amount of 1 to 20 moles, preferably 1.5 to 12 moles, irrespective of the types of the alcohols.

Contacting of the halogen-containing magnesium compound with the alcohol is preferably carried out in a hydrocarbon medium. The contacting may be carried out at room temperature or at higher temperatures, for example at least 65°C, preferably 80 to 300°C, more preferably 100 to 200°C, depending upon the types of the magnesium compound and alcohol, for a period of 15 minutes to 5 hours, preferably 30 minutes to 2 hours.

Examples of preferred alcohols having at least 6 carbon atoms, preferably 6 to 20 carbon atoms, as the electron donor used to form (i) the magnesium compound in the liquid state include aliphatic alcohols such as 2-methylpentanol, 2-ethylbutanol, n-heptanol, n-octanol, 2-ethylhexanol, decanol, dodecanol, tetradecyl alcohol, undecenol, oleyl alcohol and stearyl alcohol; alicyclic alcohols such as cyclohexanol and methyl cyclohexanol; aromatic alcohols such as benzyl alcohol, methylbenzyl alcohol, isopropylbenzyl alcohol, α-methylbenzyl alcohol and α,α-dimethylbenzyl alcohol; and aliphatic alcohols containing an alkoxy group such as n-butyl Cellosolve (ethylene glycol mono-n-butyl ether) and 1-butoxy-2-propanol. Other examples include alcohols having not more than 5 carbon atoms such as methanol, ethanol, propanol, butanol, ethylene glycol and methyl carbitol.

Suitable carboxylic acids used for the formation of the magnesium compound (i) are organic carboxylic acids having at least 7, preferably 7 to 20, carbon atoms, such as caprylic acid, 2-ethylhexanoic acid, undecylenic acid, undecanoic acid, nonylic acid and octanoic acid.

Suitable aldehydes for use in the formation of the magnesium compound (i) are aldehydes having at least 7, preferably 7 to 18, carbon atoms, such as capric aldehyde, 2-ethylhexyl aldehyde, caprylaldehyde and undecylic aldehyde. Suitable amines for use in preparing the magnesium compound (i) are amines having at least 6, preferably 6 to 18, carbon atoms, such as heptylamine, octylamine, nonylamine, decylamine, laurylamine, undecylamine and 2-ethylhexylamine.

Suitable amounts of these carboxylic acids, aldehydes, amines or ethers and suitable temperatures of use are substantially the same as those described hereinabove with regard to the alcohols. Alcohols are especially preferred as the electron donor for use in forming the magnesium compound (i) in the liquid state.

Examples of other electron donors which can be used together with the aforesaid electron donors capable of dissolving the magnesium compound include organic acid esters, organic acids, organic acid halides, organic acid anhydrides, ethers, ketones, tertiary amines, phosphite esters, phosphate esters, phosphoric amide, carboxylic amides and nitriles.

The magnesium compound (i) in the liquid state can also be prepared by using magnesium metal or a magnesium compound convertible to the aforesaid magnesium compound, and dissolving it in the aforesaid donor or donors and the hydrocarbon solvent while converting it into the aforesaid magnesium compound. For example, this can be achieved by dissolving or suspending a magnesium compound containing alkyl, alkoxy, aryloxy, acyl, amino, hydroxyl, etc., magnesium oxide, magnesium metal, etc. in a hydrocarbon solvent in which the aforesaid alcohol, amine, aldehyde or carboxylic acid is dissolved, and converting it into a halogen-containing magnesium compound having no reducing ability while halogenating it with a halogenating agent such as a hydrogen halide, halogen-containing silicon compound, a halogen, a halogen-containing aluminum compound, a halogen-containing lithium

compound and a halogen-containing sulfur compound. Alternatively, it is possible to treat a magnesium compound having reducing ability, such as Grignard reagents, dialkyl magnesiums, magnesium halides and complexes of these with other organometallic compounds, e.g. $M_{\alpha}Mg_{\beta}—R^1_pR^2_qX_rY_s$ [wherein M represents aluminum, zinc, boron or beryllium; $R^1$ and $R^2$ are hydrocarbon groups; X and Y represent groups of the formulae $OR^3$, $OSiR^4R^5R^6$, $NR^7R^8$ and $SR^9$; $R^3$, $R^4$, $R^5$, $R^6$, $R^7$ and $R^8$ are hydrogen or hydrocarbon groups; $R^9$ is a hydrocarbon group; $\alpha, \beta > 0$; $p, q, r, s \geqq 0$; m is the atomic valency of M; provided that $\beta/\alpha \geqq 0.5$, $p + q + r + s = m\alpha + 2\beta$, and $0 \leqq (r + s)/(\alpha + \beta) < 1.0$; the hydrocarbon group above is preferably selected from alkyl groups having 1 to 10 carbon atoms, or aryl groups having 6 to 20 carbon atoms] with a compound capable of destroying the reducing ability of the magnesium compound, such as an alcohol, a ketone, an ester, an ether, an acid halide, a silanol, a siloxane, oxygen, water, an acetal, silicon and aluminum to convert it into a magnesium compound having no reducing ability which can be used in the present invention.

The use of the magnesium having no reducing ability (i) is preferred in the present invention, but this does not preclude the use of a magnesium compound having reducing ability in combination. In many cases, it is not desirable to use a large amount of the compound having reducing ability together.

A solution of the magnesium compound (i) in the liquid state in an electron donor may also be used. Electron donors suitable for this purpose are selected from alcohols, amines, aldehydes, carboxylic acids and the mixtures thereof which are exemplified hereinabove. Alcohols are especially preferred.

Examples of the other electron donors are phenols, ketones, esters, ethers, amides, acid anhydrides, acid halides, nitriles and isocyanates.

The proportions of the magnesium compound and the electron donor capable of dissolving the magnesium compound and the dissolving temperature in preparing solutions of such magnesium compounds are generally in accordance with the case of dissolving the magnesium compounds in hydrocarbon solvents using the electron donors. Since at room temperature, the viscosity is generally high and the operability is poor, a high temperature must be maintained. For preparing the catalyst, the use of a solution of the magnesium in a hydrocarbon is frequently preferred.

The precipitant (ii) used in the process of this invention to form the magnesium-containing solid carrier by contacting it with the magnesium compound (i) in the liquid state may be any precipitants other than titanium compounds which react with the magnesium compound (i) and/or with the aforesaid electron donor utilized in forming the aforesaid magnesium compound in the liquid state to produce the magnesium-containing solid carrier.

Thus, the precipitant (ii) may, for example, be an organometallic compound of a metal selected from the group consisting of metals of Groups I to III of the periodic table or a silicon compound having at least one member selected from the group consisting of halogen, hydrogen and hydrocarbon groups directly bonded to the silicon atom. Two or more such organometallic compounds or silicon compounds or mixtures of the organometallic compound and the silicon compound may be used. A halogen compound of a metal selected from the group consisting of tin, phosphorus, sulfur etc. may also be used. The silicon compounds are preferred.

The organometallic compound of a metal of Groups I to III as the precipitant (ii) may, for example, be those which can be used also as component [B] of the catalyst used in the process of this invention. Preferred silicon compounds are compounds of general formula $R^1R^2R^3R^4Si$ wherein $R^1$, $R^2$, $R^3$ and $R^4$ are identical or different and each represents a hydrogen atom, a hydrocarbon group, an alkoxy group, an aryloxy group or a halogen atom. Examples of preferred hydrocarbon groups in the above general formula are alkyl groups having 1 to 20 carbon atoms, preferably 1 to 10 carbon atoms.

Examples of the silicon compound include silicon tetrahalides, tetralkyl silicons, silicon alkylhalides, silicon alkylhydrides, silicon alkoxyhalides, silicon aryloxyhalides, and alkylalkoxy silicons. Specific examples are $SiCl_4$, $CH_3SiCl_3$, $(CH_3)_2SiCl_2$, $(CH_3)_3SiCl$, $(CH_3O)SiCl_3$, $(C_2H_5O)SiCl_3$, $(C_2H_5O)_2SiCl_2$, $(C_2H_5O)_3SiCl$, $(C_6H_5O)SiCl_3$ and $(CH_3)_3(C_2H_5O)Si$. Other examples of the silicon compound include polysiloxanes having halogen, hydrocarbon group or hydrogen directly bonded to silicon. These compounds can be used as diluted in hydrocarbon solvents. Two or more of these silicon compounds can be used.

Contacting of the magnesium compound (i) in the liquid state not containing a titanium compound with the precipitant (ii) can be performed in the presence or absence of the ester (iii) selected from the group consisting of polycarboxylic acid esters and polyhydroxy compound esters.

Examples of preferred esters (iii) are polycarboxylic acid esters and polyhydroxy compound esters represented by the following formulae.

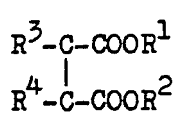
,
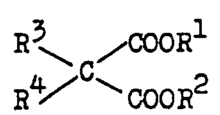
and
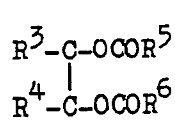

(iii)-1 (iii)-2 (iii)-3

In the above formulae (iii)—1, (iii)—2 and (iii)—3, $R^1$ represents a substituted or unsubstituted hydrocarbon group having 1 to 20 carbon atoms; $R^2$, $R^5$ and $R^6$, independently from each other, represent a hydrogen atom or a substituted or unsubstituted hydrocarbon group having 1 to 20 carbon atoms; $R^3$ and

$R^4$, independently from each other, represent a hydrogen atom or a substituted or unsubstituted hydrocarbon group having 1 to 20 carbon atoms, or $R^3$ and $R^4$ may be linked to each other and form together with the carbon atoms to which they are bonded, an alicyclic ring having 3 to 20 carbon atoms, an aromatic ring having 6 to 20 carbon atoms, or a 3- to 8-membered heterocyclic ring containing a hetero atom selected from the group consisting of N, O and S atoms; and the substituent on the hydrocarbon groups is an oxygen-containing group such as an alkoxy group, a N-containing group such as an amino group, or a S-containing group such as a sulfone group.

Specific examples of preferred polycarboxylic acid esters include aliphatic polycarboxylic acid esters such as diethyl succinate, dibutyl succinate, diethyl methylsuccinate, diisobutyl α-methylglutarate, diethyl methylmalonate, diethyl ethylmalonate, diethyl isopropylmalonate, diethyl butylmalonate, diethyl phenylmalonate, diethyl diethylmalonate, diethyl dibutylmalonate, monooctyl maleate, dioctyl maleate, dibutyl maleate, dibutyl butylmaleate, diethyl butylmaleate, diisopropyl β-methylglutarate, diallyl ethylsuccinate, diethylhexyl fumarate, diethyl itaconate and dioctyl citraconate; aromatic polycarboxylic acid esters such as monoethyl phthalate, dimethyl phthalate, methylethyl phthalate, monoisobutyl phthalate, diethyl phthalate, ethyl isobutyl phthalate, di-n-propyl phthalate, diisopropyl phthalate, di-n-butyl phthalate, diisobutyl phthalate, di-n-heptyl phthalate, di-2-ethylhexyl phthalate, di-n-octyl phthalate, dineopentyl phthalate, didecyl phthalate, benzyl butyl phthalate, diphenyl phthalate, diethyl naphthalenedicarboxylate, dibutyl naphthalenedicarboxylate, triethyl trimellitate and dibutyl trimellitate; and heterocyclic polycarboxylic acid esters such as 3,4-furanedicarboxylic acid esters.

Specific examples of the polyhydroxy compound esters are 1,2-diacetoxybenzene, 1-methyl-2,3-diacetoxybenzene and 2,3-diacetoxynaphthalene.

Other examples of the polycarboxylic acid esters to be deposited in the titanium catalyst component include esters of long-chain dicarboxylic acids such as diethyl adipate, diisobutyl adipate, diisopropyl sebacate, di-n-butyl sebacate, di-n-octyl sebacate and di-2-ethylhexyl sebacate.

Examples of the titanium compound (iv) in the liquid state to be reacted with the magnesium-containing solid carrier formed from the magnesium compound (i) and the precipitant (ii) in the presence or absence of the ester (iii) in preparing the solid titanium catalyst component (A) are tetravalent titanium compounds of the formula $Ti(OR)_gX_{4-g}$ wherein R represents a hydrocarbon group, X represents a halogen atom and g is a number represented by $0 \leqq g \leqq 4$, preferably $0 \leqq g \leqq 3.5$, more preferably $0 \leqq g \leqq 2$. Examples of the group R are alkyl groups having 1 to 10 carbon atoms and a phenyl group.

Examples of the titanium compounds (iv) are titanium tetrahalides such as $TiCl_4$, $TiBr_4$ and $TiI_4$; alkoxy or phenoxy titanium trihalides such as $Ti(OCH_3)Cl_3$, $Ti(OC_2H_5)Cl_3$, $Ti(On\text{-}C_4H_9)Cl_3$, $Ti(OC_2H_5)Br_3$ and $Ti(Oiso\text{-}C_4H_9)Br_3$,

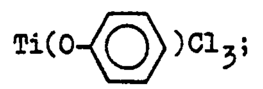

alkoxy titanium dihalides such as $Ti(OCH_3)_2Cl_2$, $Ti(OC_2H_5)_2Cl_2$, $Ti(On\text{-}C_4H_9)_2Cl_2$ and $Ti(OC_2H_5)_2Br_2$; trialkoxy titanium monohalides such as $Ti(OCH_3)_3Cl$, $Ti(OC_2H_5)_3Cl$, $Ti(On\text{-}C_4H_9)_3Cl$ and $Ti(OC_2H_5)_3Br$; tetraalkoxy titaniums such as $Ti(OCH_3)_4$, $Ti(OC_2H_5)_4$ and $Ti(On\text{-}C_4H_9)_4$; and mixture of these with other compounds such as aluminum compounds and silicon compounds. Of these, the halogen-containing titanium compounds, especially titanium tetrahalides, specifically titanium tetrachloride, are preferred.

The titanium compound (iv) in the liquid state may be any single liquid titanium compound of the type exemplified hereinabove, or a mixture of such titanium compounds, or a solution of a titanium compound such a titanium compound in a solvent such as a hydrocarbon.

In the present invention, the magnesium-containing solid carrier is formed by contacting the magnesium compound (i) in the liquid state containing no titanium compound with the precipitant (ii) other than titanium compounds in the presence or absence of the ester (iii) selected from the aforesaid polycarboxylic acid esters and polyhydroxy compound esters.

The reaction product of the solid carrier so formed and the titanium compound (iv) in the liquid state is prepared by contacting the titanium compound (iv) in the liquid state with the magnesium-containing solid carrier, pre-treated or not pre-treated with the ester (iii), in the presence or absence of the ester (iii). The ester (iii) is used at least once throughout the period of formation of the magnesium-containing solid carrier and the formation of the reaction product between the carrier and the titanium compound (iv) in the liquid state.

The polycarboxylic acid ester and/or the polyhydroxy compound ester (iii) may be caused to be present during contact of the compound (i) with compound (ii), or may be contacted with the solid product formed by the contacting of (i) and (ii) prior to contacting the solid product with the compound (iv). Or it may be caused to be present during contacting of the solid product resulting from contacting of (i) with (ii), with the compound (iv). When the polycarboxylic acid ester and/or the polyhydroxy compound ester (iii) is caused to be present during contacting of the compounds (i) and (ii), the ester (iii) may be pre-mixed with the compound (i) or (ii).

Inclusion of the ester (iii) into the magnesium compound (i) in the liquid state may be effected, for example, by simply mixing the ester (iii) with a solution of the magnesium compound, or by adding the ester (iii) to a dissolving agent in the production of a solution of the magnesium compound by the methods described hereinabove.

Alternatively, a compound capable of being converted to the ester (iii) may be added in advance and converted *in situ* into the ester (iii) instead of using the ester (iii) itself.

The amount of the ester (iii) is preferably 0.01 to 10 moles, more preferably 0.01 to 1 mole, especially preferably 0.1 to 0.5 mole, per mole of the magnesium compound. Even when the electron donor is used in a large amount, a solid catalyst component of high performance may be obtained if the amount of the titanium compound, for example, is controlled. Nevertheless, the aforesaid amounts are suitable.

The amount of the precipitant (ii) varies depending upon the type of the magnesium compound, the type of the precipitant (ii), the means of solubilizing the magnesium compound, etc. When the halogen-containing magnesium compound is rendered liquid by using an electron donor such as an alcohol, it is preferred to use the precipitant (ii) in an amount of 0.1 to 500 moles, especially 0.3 to 50 moles, per mole of the electron donor.

The magnesium compound (i) in the liquid state not containing a titanium compound may be contacted with the precipitant (ii) in accordance with any embodiments of mixing both of these compounds. Depending upon the contacting conditions, the resulting solid catalyst component may differ in shape or size. A preferred method comprises mixing the precipitant (ii) and the magnesium compound (i) in the liquid state at a temperature low enough to inhibit rapid formation of a solid product upon contacting, and gradually forming the mixture into a solid product by, for example, raising the temperature. This method can afford a solid titanium catalyst component [A] having a relatively large particle diameter and a narrow particle size distribution.

The contacting temperature used in the contacting procedure may, for example, be −70°C to +200°C. The temperatures of the compounds (i) and (ii) to be contacted may differ from each other. Generally, it is preferred in many cases to employ a method which does not use too high a temperature during mixing of the two, if it is desired to obtain a solid catalyst component of high performance having a good particle size distribution. For example, the temperature is preferably −70°C to +50°C. If, on the other hand, the contacting temperature is too low, a solid material sometimes does not form. In such a case, it is advisable to perform the reaction after elevating the temperature to, for example, 50 to 150°C, or to perform the contacting for a long period of time in order to precipitate a solid reaction product.

The reaction of the titanium compound (iv) in the liquid state with the magnesium-containing carrier formed in the aforesaid manner from the magnesium compound (i) and the precipitant (ii) is carried out in the presence or absence of the electron donor (iii) when the ester (iii) is to be contacted with the magnesium-containing solid carrier before reaction with the titanium compound (iv) in the liquid state, the ester (iii) is added to the suspension of the magnesium-containing solid carrier obtained by the aforesaid reaction or a suspension in a hydrocarbon solvent of the magnesium-containing solid carrier separated from the reaction product, and they are contacted at a temperature of, for example, 0 to 150°C.

The titanium compound (iv) in the liquid state under the contacting conditions may be a liquid titanium compound or a hydrocarbon solution of a titanium compound. The ester (iii) or a compound convertible to the ester (iii) during the reaction may be included in the titanium compound (iv) in the liquid state. The amount of the titanium compound (iv) varies depending upon the type of the titanium compound, the contacting conditions, and the amounts used of the ester (iii) and other compounds. Preferably, it is at least 0.1 mole, usually 5 to 1000 moles, especially 10 to 200 moles, per mole of the magnesium compound (based on metallic magnesium) in the magnesium-containing solid carrier. The preferred amount of the titanium compound (iv) per mole of the ester (iii) (the total amount of the ester present in the magnesium-containing solid carrier and that used in reaction with the titanium compound (iv)) is more than 1 mole, especially more than 5 moles. The reaction of the titanium compound (iv) in the liquid state with the magnesium-containing solid carrier is carried out at a temperature of preferably 30 to 200°C, especially preferably 50 to 150°C. The resulting product may be washed at least once with a liquid titanium compound, preferably titanium tetrachloride, at a temperature of preferably about 30 to about 200°C, especially preferably 50 to 150°C.

Preferably, the solid titanium catalyst component [A] obtained by the method described hereinabove is used in polymerization after it has been well washed with a hydrocarbon.

In forming the aforesaid solid magnesium-containing carrier in this invention, a porous inorganic and/or organic compound may be caused to be present, whereby the magnesium-containing solid carrier is deposited on the surface of the porous compound. At this time, the porous compound may be preliminarily contacted with the magnesium compound (i) in the liquid state, and then contacted with the titanium compound in the liquid state while it holds the magnesium compound in the liquid state. Examples of the porous compound are silica, alumina, polyolefins, and products obtained by treating these compounds with halogen-containing compounds.

The resulting solid titanium catalyst component [A] has a magnesium/titanium atomic ratio of preferably from 2 to 100, more preferably from 4 to about 50, especially preferably from 5 to 30, a halogen/titanium atomic ratio of preferably from 4 to 100, more preferably from 5 to 90, especially preferably from 8 to 50, and an ester (iii)/titanium mole ratio of preferably from 0.01 to 100, more preferably from 0.2 to 10, especially preferably from 0.4 to 6.

The solid titanium catalyst component [A] is usually granular or spherical and may have a specific surface area of, for example, at least 10 $m^2/g$, preferably 100 to 1000 $m^2/g$.

In accordance with this invention, olefins are polymerized or copolymerized in the presence of a

catalyst composed of the resulting solid titanium catalyst component [A], an organometallic compound catalyst component [B] of a metal of Groups I to III of the periodic table and [C] an organosilicon compound catalyst component having an Si—O—C or Si—N—C bond in its molecule.

Examples of the organometallic compounds of metals of Groups I to III of the periodic table, as the catalyst component [B], are given below.

(1) Organoaluminum compounds having at least one Al—C linkage in the molecule, for example, organoaluminum compounds of the general formula

$$R^1_mAl(OR^2)_nH_pX_q$$

wherein $R^1$ and $R^2$ are identical or different and represent a hydrocarbon group containing 1 to 15 carbon atoms, preferably 1 to 4 carbon atoms; X represents a halogen atom; m is a number represented by $0 < m \leqq 3$; n is a number represented by $0 \leqq n < 3$; p is a number represented by $0 \leqq p < 3$; q is a number represented by $0 \leqq q < 3$; and $m + n + p + q = 3$.

Examples of the hydrocarbon groups in the above formula are alkyl groups.

(2) Alkylated complexes of metals of Group I and aluminum which are represented by the general formula

$$M^1AlR^1_4$$

wherein $M^1$ is Li, Na or K, and $R^1$ is as defined above.

(3) Dialkyl compounds of metals of Group II which are represented by the general formula

$$R^1R^2M^2$$

wherein $R^1$ and $R^2$ are as defined above, and $M^2$ represents Mg, Zn or Cd.

Examples of the organoaluminum compounds (1) above are those of the following general formulae.

$$R^1_mAl(OR^2)_{3-m}$$

wherein $R^1$ and $R^2$ are as defined hereinabove, and m is preferably a number represented by $1.5 \leqq m \leqq 3$.

$$R^1_mAlX_{3-m}$$

wherein $R^1$ is as defined above, X is halogen, and m is preferably a number represented by $0 < m < 3$.

$$R^1_mAlH_{3-m}$$

wherein $R^1$ is as defined above, and m is preferably a number represented by $2 \leqq m < 3$.

$$R^1_mAl(OR^2)_nX_q$$

wherein $R^1$ and $R^2$ are as defined above, X is halogen, $0 < m \leqq 3$, $0 \leqq n < 3$, $0 \leqq q < 3$, and $m + n + q = 3$.

Specific examples of the aluminum compounds (1) include trialkyl aluminums such as triethyl aluminum and tributyl aluminum; trialkenyl aluminum such as triisoprenyl aluminum; dialkyl aluminum alkoxides such as diethyl aluminum ethoxide and dibutyl aluminum butoxide; alkyl aluminum sesquialkoxides such as ethyl aluminum sesquiethoxide and butyl aluminum sesquibutoxide; dialkyl aluminum halides such as diethyl aluminum chloride, dibutyl aluminum chloride and diethyl aluminum bromide; alkyl aluminum sesquihalides such as ethyl aluminum sesquichloride, butyl aluminum sesquichloride and ethyl aluminum sesquibromide; partially halogenated alkyl aluminums, for example alkyl aluminum dihalides such as ethyl aluminum dichloride and propyl aluminum dichloride; dialkyl aluminum hydrides such as diethyl aluminum hydride and dibutyl aluminum hydride; partially hydrogenated alkyl aluminums, for example alkyl aluminum dihydrides such as ethyl aluminum dihydride and propyl aluminum dihydride; and partially alkoxylated and halogenated alkyl aluminums such as ethyl aluminum ethoxychloride, butyl aluminum butoxychloride and ethyl aluminum ethoxybromide.

$LiAl(C_2H_5)_4$ and $LiAl(C_7H_{15})_4$ are cited as examples of the compounds (2) above, and diethyl lead and diethyl magnesium are cited as examples of the compound (3). Alkyl magnesium halides such as ethyl magnesium chloride can also be used. Of the above compounds, trialkyl aluminums, alkyl aluminum halides, and mixtures of these are preferred.

The organosilicon compound having an Si—O—C or Si—N—C bond used in this invention as component [C] of the catalyst is, for example, an alkoxysilane or an aryloxysilane.

Examples of the organosilicon compound [C] are compounds of the formula

$$R_nSi(OR^1)_{4-n}$$

wherein n is 0 to 3, R is, for example, an alkyl, cycloalkyl, aryl, alkenyl, haloalkyl or aminoalkyl group or a

halogen atom, and $R^1$ represents a hydrocarbon group such as an alkyl, cycloalkyl, aryl, alkenyl or alkoxyalkyl group, provided that *n* R groups or (4-n) $OR^1$ groups may respectively be identical or different.

In the above formula, the alkyl group may be an alkyl group having 1 to 10 carbon atoms; the cycloalkyl group may have 3 to 20 carbon atoms; and aryl group may have 6 to 20 carbon atoms; the alkenyl group may have 1 to 10 carbon atoms; the halo-alkyl group may be a chloro-, bromo- or fluoro-alkyl group having 1 to 10 carbon atoms; the aminoalkyl group may have 1 to 10 carbon atoms; The halogen atom may be Cl, Br, I or F; and the alkoxyalkyl group may be a $C_1$—$C_{10}$ alkoxy-$C_1$—$C_{10}$ alkyl group.

Other examples include siloxanes having the group $OR^1$, and silyl esters of carboxylic acids. Still other examples are a combination of a compound having no Si—O—C bond and a compound having an O—C bond which are reacted in advance, or reacted *in situ*, to form a compound having an Si—O—C bond. For example, there may be used a combination of a halogen-containing silane compound or silicon hydride containing no Si—O—C bond with an alkoxy-containing aluminum compound, an alkoxy-containing magnesium compound, a metal alcoholate, an alcohol, a formate ester, ethylene oxide, etc. Organosilicon compounds or compounds containing another metal such as aluminum or tin may also be used.

Specific examples of the organosilicon compound [C] used in this invention include trimethylmethoxysilane, trimethylethoxysilane, dimethyldimethoxysilane, dimethyldiethoxysilane, diphenyldimethoxysilane, methylphenyldimethoxysilane, diphenyldiethoxysilane, ethyltrimethoxysilane, methyltrimethoxysilane, vinyltrimethoxysilane, phenyltrimethoxysilane, gamma-chloropropyltrimethoxysilane, methyltriethoxysilane, ethyltriethoxysilane, vinyltriethoxysilane, butyltriethoxysilane, phenyltriethoxysilane, gamma-aminopropyltriethoxysilane, chlorotriethoxysilane, ethyltriisopropoxysilane, vinyltributoxysilane, ethyl silicate, butyl silicate, trimethylphenoxysilane, methyltrialloyloxysilane, vinyltris(β-methoxyethoxy)silane, vinyltriacetoxysilane, dimethyltetraethoxydisiloxane, and phenyldiethoxydiethylaminosilane. Especially preferred among these are those of the above formula $R_nSi(OR^1)_{4-n}$ such as methyltrimethoxysilane, phenyltrimethoxysilane, methyltriethoxysilane, ethyltriethoxysilane, vinyltriethoxysilane, phenyltriethoxysilane, vinyltributoxysilane, ethyl silicate, diphenyldimethoxysilane, diphenyldiethoxysilane and methylphenylmethoxysilane.

The component [C] may be used in the form of an adduct with another compound.

According to the process of this invention, olefins are polymerized with or without up to 5 mole% of a diolefin in the presence of a catalyst composed of [A] the solid titanium catalyst component, [B] the organometallic compound and [C] the organosilicon compound catalyst component.

Olefins having 2 to 8 carbon atoms are preferred. Specific examples include ethylene, propylene, 1-butene, 4-methyl-1-pentene and 1-octene. (In EP—A—25910, which has the same priority and filing dates as this application, we describe and claim the preparation of 4-methyl-1-pentene polymers or copolymers using a catalyst comprising (A) a solid highly active titanium catalyst component composed of magnesium, titanium, halogen and a diester of a dicarboxylic acid, (B) an organoaluminium compound, and (C) an organosilicon compound of formula $R^1_3$ $Si(OR^2)$, wherein $R^1$ and $R^2$ each represent a $C_1$—$C_5$ hydrocarbon group, there having been a pre-polymerization or pre-copolymerization step in which methylpentene is pre(co)polymerized in the presence of a catalyst comprising the catalyst component (A), a part of the catalyst component (B) and a part of the catalyst component (C).) Examples of the diolefins include non-conjugated diolefins such as dicyclopentadiene, 1,4-hexadiene and ethylidenenorbornene.

The olefins may be homopolymerized, random copolymerized or blocked copolymerized. In copolymerizations, diolefins such as conjugated or non-conjugated dienes can be chosen as a comonomer.

The polymerization can be performed either in the liquid phase or in the gaseous phase. In the liquid-phase polymerization, an inert hydrocarbon solvent such as hexane, heptane or kerosene may be used as a reaction medium, but the olefin itself may also be used as the reaction medium.

The amount of the catalyst can be properly selected. For example, it is preferred that per liter of the volume of the reaction zone, the component [A] be used in a proportion of 0.0001 to 1.0 millimole calculated as titanium atom; the compound [B] is used in such a proportion that the amount of the metal atoms in the component [B] is 1 to 2000 moles, preferably 5 to 500 moles, per mole of titanium atom in the component [A]; and the component [C] is used in such a proportion that the amount of the Si atoms in compound [C] is 0.001 to 10 moles, preferably 0.01 to 2 moles, preferably 0.05 to 1 mole, per mole of the metal atom in the component [B].

The term "the volume of the reaction zone", as used above, denotes the volume of the liquid phase of the reaction zone in the case of a liquid-phase reaction, and the volume of the vapor phase of the reaction zone in the case of a vapor-phase reaction.

The catalyst components [A], [B] and [C] may be contacted together at the time of polymerization, or before the polymerization. In contacting them before the polymerization, it is possible to contact only two of them freely chosen, or portions may be taken from two or three of these the individual components and contacted with each other. The contacting of the catalyst components before the polymerization may be effected in an inert gaseous atmosphere or in an olefin atmosphere.

The polymerization of olefins is carried out preferably at a temperature of 20 to 200°C, more preferably 50 to 180°C and a pressure of from atmospheric pressure to 9.8 MPa (100 kg/cm²), preferably 0.2 to 4.9 MPa (2 to 50 kg/cm²). The polymerization may be performed batchwise, semi-continuously, or continuously. It is also possible to perform the polymerization in two or more stages having different reaction conditions.

In particular, when applied to stereospecific polymerization of alpha-olefins having at least 3 carbon

atoms, the process of this invention can afford polymers having a high stereospecificity index with a high catalytic efficiency. In polymerizing olefins using a similar solid catalyst component previously suggested, an attempt to obtain a polymer of a high melt index by using hydrogen frequently results in a tendency of unnegligibly decreasing the stereospecificity of the polymer, but the process of this invention can reduce this tendency. As the catalyst component in accordance with this invention is highly active, the amount of the polymer yielded per unit weight of the solid titanium catalyst component is larger than that in the prior art when obtaining a polymer of the same stereospecific index. Accordingly, the amount of the catalyst residue in the polymer, especially its halogen content, can be reduced, and the operation of removing the catalyst can be omitted. Moreover, the tendency toward corrosion of molds in molding the resulting polymer can be markedly inhibited.

Furthermore, by slurry polymerization or gaseous phase polymerization, too, a polymer in the form of granules or nearly spherical particles can be formed. Such a granular or spherical polymer has good flowability, and in some applications, it can be used without pelletization.

According to the process of this invention, the melt index of the polymer can be changed by using a lesser amount of a molecular weight controlling agent such as hydrogen than in the case of using conventional catalyst systems. Surprisingly, by increasing the amount of the molecular weight controlling agent added, the activity of the catalyst system used in this invention rather tends to increase. This characteristic is not seen in the conventional catalyst systems. With the conventional catalyst systems, when the amount of the molecular weight controlling agent is increased in an attempt to obtain a polymer having a high melt index, the partial pressure of the olefin monomer is reduced. Consequently, the activity of the catalyst system is naturally reduced. The catalyst system in accordance with this invention does not give rise to any of such problems and its activity rather tends to increase.

The conventional catalyst systems decrease in activity with the lapse of the polymerization time. Since with the catalyst system of this invention, such a decrease is scarcely seen, the output of polymer is greatly increased when the catalyst is used, for example, in a multiple-stage continuous polymerization process.

Furthermore, since the catalyst system in accordance with this invention is very stable at high temperatures, even when the polymerization of propylene is carried out, for example, at 90°C, there is not much reduction in stereospecificity.

The following Examples illustrate the present invention more specifically.

## Example 1

Anhydrous magnesium chloride (4.76 g), 25 ml of decane, 50 ml of 2-ethylhexyl alcohol and 2.7 ml of diisobutyl phthalate were heated at 120°C for 2 hours to form a uniform solution. The solution was maintained at 0°C with stirring, and a mixture of 11.3 ml of ethyl aluminum sesquichloride and 25 ml of decane was added dropwise to the solution over the course of 1 hour. After the addition, the mixture was heated to 40°C and maintained at this temperature for 1 hour. This operation yielded a solid substance. The resulting suspension was left to stand, and the supernatant liquid was removed. The residue was again formed into a suspension using 150 ml of decane. This operation was repeated three times, and finally 25 ml of decane was added. The resulting suspension was put into 100 ml of titanium tetrachloride at room temperature with stirring. The mixture was then heated to 110°C, and maintained at this temperature for 2 hours with stirring. The solid portion was collected by filtration, and again suspended in 100 ml of titanium tetrachloride and reacted at 110°C for 2 hours. The solid material was collected by filtration, and washed fully with purified hexane until no free titanium compound was detected from the washings. The washed product was dried to form a catalyst component (A). This catalyst component contained 2.7% by weight of titanium and 60% by weight of chlorine.

### Polymerization

A 2-liter autoclave was charged with 750 ml of purified hexane, and at room temperature under a propylene atmosphere, 2.5 mmoles of triethyl aluminum and 0.25 millimoles of diphenyldimethoxysilane were introduced into the autoclave. Thereafter, 0.015 mmole, calculated as titanium atom, of the catalyst component (A) was added. Hydrogen (200 ml) was introduced into the autoclave, and the temperature was raised to 70°C. Propylene was polymerized at this temperature for 2 hours. During the polymerization, the pressure was maintained at 0.7 MPa (7 $kg/cm^2$)-G.

After the polymerization, the slurry containing the resulting polymer was filtered to separate it into a white powdery polymer and a liquid layer. After drying, the amount of the white powdery polymer yielded was 289.6 g. The polymer has a boiling n-heptane extraction residue of 98.7%, an MFR of 3.6 dg/min and an apparent density of 0.37 $g/cm^3$. Concentrating the liquid layer gave 2.9 g of a solvent-soluble polymer. Accordingly, the activity was 19,500 g-PP/mmole-Ti, and the stereo regularity index (II) was 97.7%.

## Example 2

Anhydrous magnesium chloride (4.76 g), 50 ml of decane and 23.2 ml of 2-ethylhexyl alcohol were heated at 120°C for 2 hours to form a uniform solution. The solution was added over the course of 1 hour to 200 ml of silicon tetrachloride maintained at 20°C. After the addition, the mixture was heated to 50°C and maintained at this temperature for 4 hours. This operation yielded a solid substance. The suspension was

left to stand and the supernatant was removed. The residue was again formed into a suspension using decane. This operation was fully repeated to remove free silicon tetrachloride. The suspension was introduced into 100 ml of titanium tetrachloride containing 2.7 ml of diisobutyl phthalate. The mixture was then heated to 110°C, and maintained at this temperature for 2 hours with stirring. The mixture was then worked up by the same operation as in Example 1 to give a solid component (A). This component contained 1.8% by weight of titanium, 61% by weight of chlorine, 20% by weight of magnesium and 8.7 g of diisobutyl phthalate.

Polymerization

Using the catalyst so obtained, propylene was polymerized by the same operation as in Example 1 to give 317.3 g of a white powdery polymer having a boiling n-heptane extraction residue of 98.6%, an MFR of 4.5 dg/min. and an apparent density of 0.37 g/ml. Concentrating the liquid layer gave 3.0 g of a solvent-soluble polymer. Accordingly, the activity was 21,400 g-PP/millimole-Ti, and the II was 97.7%.

### Examples 3 to 5

A solid titanium catalyst component [A] was prepared in the same way as in Example 2 except that 2.7 ml of diisobutyl phthalate was changed to 12.5 millimoles of each of the compounds shown in Table 1, and propylene was polymerized in accordance with the method of Example 1. The results are shown in Table 1.

### Examples 6 and 7

Propylene was polymerized in the same way as in Example 2 except that the silane compound added at the time of polymerization was changed as shown in Table 2. The results are shown in Table 1.

Table 1

| Example | Ester in the titanium catalyst component (A) | Silane compound added at the time of polymerization | Activity (g-PP/ mmole-Ti) | II (%) | Apparent bulk density (g/ml) | MFR (dg/minl) |
|---|---|---|---|---|---|---|
| 3 | Di-n-butyl phthalate | Diphenylmethoxysilane | 21,600 | 97.5 | 0.36 | 3.4 |
| 4 | Diethyl cyclohexanedicarboxylate | Ditto | 22,400 | 97.1 | 0.35 | 6.1 |
| 5 | Diethyl phenylmalonate | Ditto | 19,300 | 97.3 | 0.37 | 2.4 |
| 6 | Di-isobutyl phthalate | Phenyltriethoxysilane | 18,300 | 96.9 | 0.36 | 1.9 |
| 7 | Ditto | Vinyltrimethoxysilane | 19,200 | 96.2 | 0.36 | 3.4 |

Example 8

A 2-liter autoclave was charged with 1 liter of purified hexane and at room temperature in an atmosphere of nitrogen, further with 1.0 millimole of triethyl aluminum, 0.1 millimole of phenyltriethoxysilane and 0.02 millimole, calculated as titanium atom, of the solid titanium catalyst component [A]. The autoclave was sealed up, and its temperature was raised. Hydrogen at 0.4 MPa (4.0 kg/cm$^2$) was introduced into the autoclave at 60°C, and ethylene was introduced. The system was kept at a constant temperature of 70°C, and the total pressure of the reaction system was maintained at 0.8 MPa (8.0 kg/cm$^2$)-G. After the lapse of 2 hours from the introduction of ethylene, the reaction system was cooled to terminate the reaction.

After the polymerization, the slurry containing the resulting polymer was filtered to collect a white powdery polymer. After drying, the amount of the white powdery polymer yielded was 25.32 g. The polymer had an apparent density of 0.36 g/ml and an MI of 4.0 dg/min. The particle size distribution of the polymer was very good. The $\overline{Mw}/\overline{Mn}$ of the polymer measured by gel-permeation chromatography was 5.1.

**Claims**

1. A process for producing a polymer or copolymer of an olefin which comprises polymerizing or copolymerizing at least one olefin with or without up to 5 mole% of a diolefin in the presence of a catalyst composed of

[a] a solid titanium catalyst component containing magnesium, titanium, halogen and an electron donor, which is a reaction product of (iv) a titanium compound in the liquid state and a magnesium-containing solid carrier, said magnesium-containing solid carrier being formed by contacting (i) a magnesium compound in the liquid state not containing a titanium compound and selected from a liquid magnesium compound, a hydrocarbon solvent solution of a magnesium compound and a magnesium compound in the liquid state obtained by contacting a magnesium compound with an electron donor capable of dissolving the magnesium compound, with (ii) a precipitant other than a titanium compound in the presence of or absence of (iii) an electron donor, said reaction product being formed by contacting the titanium compound (iv) in the liquid state and the magnesium-containing solid carrier, pre-treated or not pre-treated with the electron donor (iii), in the presence or absence of the electron donor (iii), the electron donor (iii) being used at least once throughout the period of formation of the magnesium-containing solid carrier and the formation of the reaction product, and

[b] an organometallic compound of a metal selected from metals of Groups I to III of the periodic table; characterised in that said catalyst is composed of

[A] a solid titanium catalyst component [a] in which the electron donor (iii) is an ester selected from polycarboxylic acid esters and polyhydroxy compound esters,

[B] the organometallic compound [b], and

[C] an organosilicon compound having an Si—O—C or Si—N—C bond in its molecule.

2. A process according to claim 1 wherein said precipitant (ii) is an organometallic compound of a metal selected from metals of Groups I to III of the periodic table or a silicon compound having at least one halogen, hydrogen or hydrocarbon group directly bonded to the silicon atom.

3. A process according to claim 1 or 2 wherein the electron donor capable of dissolving the magnesium compound is selected from alcohols, organic carboxylic acids, aldehydes, amines, ethers and mixtures of two or more thereof.

4. A process according to claim 1, 2 or 3 wherein the ester (iii) is represented by one of the following formulae

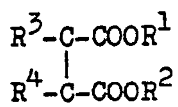 , 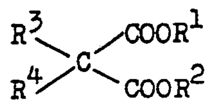 and 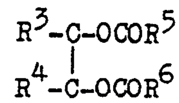

wherein R$^1$ represents a substituted or unsubstituted hydrocarbon group having 1 to 20 carbon atoms, R$^2$, R$^5$ and R$^6$, independently from each other, represent a hydrogen atom or a substituted or unsubstituted hydrocarbon group having 1 to 20 carbon atoms, R$^3$ and R$^4$, independently from each other, represent a hydrogen atom or a substituted or unsubstituted hydrocarbon group having 1 to 20 carbon atoms, or R$^3$ and R$^4$ may be linked to each other and form together with the carbon atoms to which they are bonded an alicyclic ring having 3 to 20 carbon atoms, an aromatic ring having 6 to 20 carbon atoms, or a 3- to 8-membered heterocyclic ring containing a hetero atom selected from N, O and S atoms, and where the hydrocarbon groups stated above are substituted, the substituent is selected from oxygen-containing groups, nitrogen-containing groups and sulfur-containing groups.

5. A process according to any one of claims 1 to 4 wherein the mole ratio, calculated as metal atoms, of magnesium/titanium in the solid titanium catalyst component [A] is from 2/1 to 100/1, and the mole ratio of the ester (iii)/titanium calculated as metal atom is from 0.01/1 to 100/1.

**Patentansprüche**

1. Verfahren zur Herstellung eines Polymers oder Copolymers von einem Olein, umfassend das Polymerisieren oder Copolymerisieren mindestens eines Olefins mit oder ohne bis zu 5 Mol-% eines Diolefins in Gegenwart eines Katalysators, bestehend aus

a) einer festen Titankatalysatorkomponente, enthaltend Magnesium, Titan, Halogen und einen Elektronendonor, die das Reaktionsprodukt ist von (iv) einer Titanverbindung in flüssigem Zustand und einem Magnesium-haltigen Träger, wobei der Magnesium-haltige Träger hergestellt worden ist durch Zusammenbringen von (i) einer Magnesiumverbindung in flüssigem Zustand, die keine Titanverbindung enthält und ausgewählt ist aus einer flüssigen Magnesiumverbindung, einer Lösung einer Magnesiumverbindung in einem Kohlenwasserstoff-Lösungsmittel und einer Magnesiumverbindung in flüssiger Form, die erhalten worden ist durch Zusammenbringen einer Magnesiumverbindung mit einem Elektronendonor, der imstande ist, die Magnesiumverbindung zu lösen, mit (ii) einem anderen Ausfäll-Mittel als einer Titanverbindung in Gegenwart oder Abwesenheit von (iii) einem Elektronendonor, wobei das Reaktionsprodukt gebildet wird durch Zusammenbringen der Titanverbindung (iv) in flüssiger Form mit dem Magnesium-haltigen festen Träger, der mit dem Elektronendonor (iii) vorbehandelt oder nicht vorbehandelt ist, in Gegenwart oder Abwesenheit des Elektronendonors (iii), wobei der Elektronendonor (iii) zumindest einmal während der Zeit der Herstellung des Magnesium-haltigen festen Trägers und der Bildung des Reaktionsproduktes angewandt wird, und

(b) einer metallorganischen Verbindung eines Metalls, ausgewählt aus den Metallen der Gruppen I und III des Periodensystems,

dadurch gekennzeichnet, daß der Katalysator zusammengesetzt ist aus

(A) einer festen Titankatalysatorkomponente (a), in der Elektronendonor (iii) ein Ester ist, ausgewählt aus Polycarbonsäureestern und Polyhydroxyestern,

(B) der metallorganischen Verbindung (b) und

(C) einer Organosiliciumverbindung mit einer Si—O—C— oder Si—N—C-Bindung im Molekül.

2. Verfahren nach Anspruch 1, wobei das Ausfäll-Mittel (ii) eine metallorganische Verbindung eines Metalls ist, ausgewählt aus Metallen der Gruppen I und III des Periodensystems, oder eine Siliciumverbindung mit mindestens einem Halogen-Wasserstoff oder einer Kohlenwasserstoffgruppe, direkt an das Siliciumatom gebunden.

3. Verfahren nach Anspruch 1 oder 2, wobei der Elektronendonor, der imstande ist die Magnesiumverbindung zu lösen, ausgewählt ist aus Alkoholen, organischen Carbonsäuren, Aldehyden, Aminen, Ethern und Gemischen von zwei oder mehreren dieser Verbindungen.

4. Verfahren nach Anspruch 1, 2 oder 3, wobei der Ester (iii) angegeben wird durch eine der folgenden Formeln

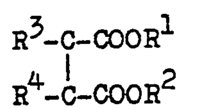 , 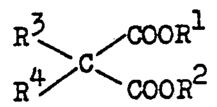 und 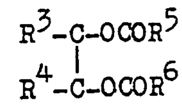

wobei $R^1$ eine substituierte oder nicht substituierte Kohlenwasserstoffgruppe mit 1 bis 20 Kohlenstoffatomen bedeutet, $R^2$, $R^5$ und $R^6$ unabhängig voneinander (jeweils) ein Wasserstoffatom oder eine substituierte oder nicht substituierte Kohlenwasserstoffgruppe mit 1 bis 20 Kohlenstoffatomen bedeuten, $R^3$ und $R^4$ unabhängig voneinander (jeweils) ein Wasserstoffatom oder eine substituierte oder nicht substituierte Kohlenwasserstoffgruppe mit 1 bis 20 Kohlenstoffatomen bedeuten, oder $R^3$ und $R^4$ aneinander gebunden sein können und zusammen mit dem Kohlenstoffatom, an das sie gebunden sind, einen alicyclischen Ring mit 3 bis 20 Kohlenstoffatomen, einen aromatischen Ring mit 6 bis 20 Kohlenstoffatomen oder einen 3- bis 8-gliedrigen heterocyclischen Ring, enthaltend ein Heteroatom ausgewählt aus N-, O- und S-Atomen, bilden und, wenn die oben angegebenen Kohlenwasserstoffgruppen substituiert sind, der Substituent ausgewählt ist aus Sauerstoff-haltigen Gruppen, Stickstoff-haltigen Gruppen und Schwefel-haltigen Gruppen.

5. Verfahren nach einem der Ansprüche 1 bis 4, wobei das Molverhältnis, berechnet als Metallatome, von Magnesium zu Titan in der festen Titankatalysatorkomponente (A) 2:1 bis 100:1 beträgt und das Molverhältnis des Esters (iii) zu Titan, berechnet als Metallatom, 0,01:1 bis 100:1 beträgt.

**Revendications**

1. Procédé de fabrication d'un polymère ou d'un copolymère d'oléfine, consistant à polymériser ou copolymériser au moins une oléfine avec ou sans 5 mole% maximum d'une dioléfine, en présence d'un catalyseur composé de:

(a) un composé catalyseur solide au titane contenant du magnésium, du titane, un halogène et un donneur d'électrons, qui est un produit de réaction (iv) d'un composé en phase liquide de titane et d'un support solide contenant du magnésium, ledit support solide contenant du magnésium étant formé en

mettant en contact (i) un composé en phase liquide de magnésium ne contenant pas de composé de titane et choisi parmi un composé liquide de magnésium, une solution d'un composé de magnésium dans un solvant hydrocarbure et un composé en phase liquide de magnésium obtenu en mettant en contact un composé de magnésium avec un donneur d'électrons capable de dissoudre le composé de magnésium, avec (ii) un précipitant autre qu'un composé de titane, en la présence ou l'absence de (iii) un donneur d'électrons, ledit produit de réaction étant formé en mettant en contact le composé en phase liquide de titane (iv) et le support solide contenant du magnésium, pré-traité ou non par le donneur d'électrons (iii), en la présence ou l'absence du donneur d'électrons (iii), le donneur d'électrons (iii) étant utilisé au moins une fois au cours de l'ensemble de la période de formation du support solide contenant du magnésium et de formation du produit de réaction, et

(b) un composé organométallique d'un métal choisi parmi les métaux des groupes I à III du tableau périodique;

caractérisé en ce que ledit catalyseur est composé de:

(A) un composé catalyseur solide au titane (a) dans lequel le donneur d'électrons (iii) est un ester choisi parmi les esters d'acides polycarboxyliques et les esters de composés polyhydroxyles,

(B) le composé organométallique (b), et

(C) un composé organosilicique comportant dans sa molécule une liaison Si—O—C ou Si—O—N.

2. Procédé d'après la revendication 1, dans lequel ledit précipitant (ii) est un composé organométallique d'un métal choisi parmi les métaux des groupes I à III du tableau périodique ou un composé de silicium comportant au moins un halogène, hydrogène ou groupement hydrocarboné lié directement à l'atome de silicium.

3. Procédé d'après la revendication 1 ou 2, dans lequel le donneur d'électrons capable de dissoudre le composé de magnésium est choisi parmi les alcools, les acides carboxyliques organiques, les aldéhydes, les amines, les éthers et les mélanges de deux ou plus de ces substances.

4. Procédé d'après l'une quelconque des revendications 1, 2 ou 3, dans lequel l'ester (iii) est représenté par l'une des formules suivantes,

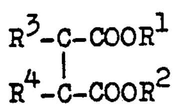 , 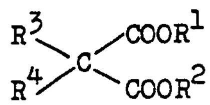 et 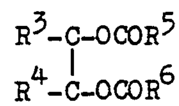

où $R^1$ représente un groupe hydrocarboné substitué ou non, ayant de 1 à 20 atomes de carbone, $R^2$, $R^5$ et $R^6$, indépendamment les uns des autres, représentent un atome d'hydrogène ou un groupe hydrocarboné, substitué ou non, ayant de 1 à 20 atomes de carbone, $R^3$ et $R^4$, indépendamment l'un de l'autre, représentent un atome d'hydrogène ou un groupe hydrocarboné, substitué ou non, ayant de 1 à 20 atomes de carbone, ou bien $R^3$ et $R^4$ peuvent être liés l'un à l'autre et former avec les atomes de carbone auxquels ils sont liés un cycle alicyclique ayant 3 à 20 atomes de carbone, un cycle aromatique ayant 6 à 20 atomes de carbone ou un hétérocycle de 3 à 8 chainons contenant un hétéroatome choisi parmi les atomes d'azote, d'oxygène et de soufre, et où les groupements hydrocarbonés dont il est question ci-dessus sont substitués, le substituant étant choisi parmi les groupements contenant de l'oxygène, de l'azote ou du soufre.

5. Procédé d'après l'une quelconque des revendications 1 à 4, caractérisé en ce que le rapport molaire magnésium/titane, calculé d'après le nombre d'atomes de métal, dans le composé catalyseur solide au titane (A) va de 2/1 à 100/1, et le rapport molaire ester (iii)/titane, calculé d'après le nombre d'atomes de métal, va de 0,01/1 à 100/1.